# EUROPEAN PATENT APPLICATION

(11) **EP 4 675 496 A1**
(43) Date of publication of application: **07.01.2026**
(21) Application number: 25182250.8
(22) Date of filing: 12.06.2025
(51) Int. Cl.: G06N 3/044, G06N 3/0464, G06N 3/048, G06N 3/084

(54) **METHOD FOR CALCULATING DECISION VARIABLES**

(30) Priority: 04.07.2024 TW 113124938
(71) Applicant: MetaTech (AP) Inc., New Taipei City 221 (TW)
(72) Inventor: YANG, YING-CHEN, 110049 Taipei City (TW); SUN, TZU-LUNG, 221008 New Taipei City (TW); LIN, YEONG-SUNG, Taipei (TW); CHEN, TSUNG-CHI, 22175 New Taipei City (TW)
(74) Representative: Wang, Bo

(57) **Abstract**

The present invention provides a method for calculating decision variables. A dummy layer is added at an input layer of a trained neural network predictive model. The dummy layer includes a plurality of artificial neurons respectively connected to a corresponding input terminal of the input layer for the trained predictive model by a newly established link. The input value of each artificial neuron is set to 1, the bias value of the activation function is set to 0, and the output of the activation function is set to 1 when the input of the activation function is 1. The initial weight value of the newly established link is selected and set, and the weight values can be considered as decision variables, wherein the weight values can have ranges or other inter-conditional restrictions. The optimal solution is obtained using the optimizer built in a general machine-learning platform when the parameters of the trained predictive model are frozen, and only the weight values of the newly established links are adjusted. The training objective is set so that the output of the parameter predictive model matches the desired target result. At the end of the training, the weight values of the newly established link new are the feasible input decision variables. This invention allows the effective use of the general machine learning platforms and the built-in methods to find the optimal input parameters that achieve the expected results.

## Description

### BACKGROUND OF THE INVENTION

### 1. Field of the invention

The present invention relates to a method for calculating decision variables, and more particularly, to a method for deducing decision variables and process parameters in reverse by using an optimizer built into an artificial intelligence neural network training platform.

### 2. Description of the prior art

With advancements in medical engineering technology, there has been a profound impact on the healthcare field and an increased application of regenerative medicine in clinical settings. Regenerative medicine primarily utilizes the regenerative capabilities of cells to repair damaged tissues and organs. Its applications are extensive, and by integrating tissue engineering and molecular biology techniques, it holds promise for improving and treating previously difficult-to-treat diseases such as diabetes, neurological disorders, cardiovascular diseases, and cancer.

Currently, regenerative medicine mainly applies to tissue engineering and regenerative therapies, organ transplantation and regeneration, tissue regeneration and repair, cancer treatment, neural regeneration, immune cell therapy, and stem cell therapy. Among these, research and application in cell therapy within regenerative medicine are garnering increasing attention. Cell therapy is the process of culturing or processing cells from a human body in vitro and then transplanting the cells to the human body to replace or repair damaged tissue and/or cells.

Cell therapy offers advantages such as individualized treatment, avoidance of rejection reactions, organ transplantation alternatives, and restoration of tissue function. Recently, many governments have gradually opened up the application of cell therapy within their countries. Consequently, more domestic and international scholars are engaging in cell therapy research, leading to significant advancements in treating various diseases. For example, autologous fibroblasts are used to treat skin defects, autologous chondrocytes are used to repair knee cartilage defects, and autologous bone marrow mesenchymal stem cells are used to treat spinal cord injuries. Previous research indicates that due to the unique characteristics of cells in each human body, different cell preparations are suitable for various cases depending on the disease and symptoms. Thus, treatments need to be customized for each situation, increasing the complexity and difficulty of the cell manufacturing process. Additionally, the quality of cell therapy products directly affects the safety and efficacy of the treatment. Therefore, the cell culture requires strict control of cell growth conditions and real-time monitoring of culture and environmental parameters to prevent contamination or poor quality during cell cultivation. However, the high variability between cells from different individuals means that the optimal culture and environmental parameters for cell preparations vary for each case. Furthermore, during manufacturing, each cell preparation requires adjustments to various decision variables (i.e., process parameters) to achieve the desired results. Hence, it is impossible to produce cell preparations with fixed decision variables.

Conventional techniques train predictive models using machine learning on large datasets and adjust model parameters through machine learning optimizers to minimize or maximize the objective function. It improves model accuracy and speeds up model convergence, reducing machine learning, convergence time, and cost. Additionally, these predictive models can input various decision variables to generate predictions for cell culture outcomes, allowing users to simulate the effects of their designed cell culture processes in advance.

However, the predictive models trained through machine learning cannot deduce the decision variables in reverse for the cell culture process based on the user's expected results. In other words, users still need to try numerous decision variables during process design, resulting in a labor-intensive and resource-consuming design and improvement process for the culture process. Moreover, the need for parameter prediction is not limited to the cell culture process but also applies to other machine learning models involving neural network training, where deducing decision variables and process parameters in reverse are essential.

Therefore, it is necessary to develop a method that can deduce the decision variables in reverse in the process to match the predicted results and further optimize the process.

### SUMMARY OF THE INVENTION

In view of this, one scope of the present invention is to provide a method for calculating decision variables to solve the aforementioned problems. The method for calculating decision variables comprises the following steps of: providing a trained predictive model, the trained predictive model being obtained by machine learning through a machine learning method, the trained predictive model comprising an input layer and an output layer, the trained predictive model for inputting a plurality of input parameters through the input layer and generating a predicted result corresponding to the input parameters through the output layer; setting a target result corresponding to the predicted result of the trained predictive model and providing at least one confirmed input parameter among the input parameters; adding a dummy layer connected to the input layer of the trained predictive model, the dummy layer comprising a plurality of artificial neurons, each of the artificial neurons being respectively connected to a input terminal of the input layer, a parameter predictive model formed from the trained predictive model and the dummy layer, and the predicted result of the trained predictive model served as an output of the parameter predictive model; setting a bias value of an activation function for each of the artificial neurons to 0, wherein when an input value of the activation function is 1, an output value of the activation function is 1; assigning at least one first weight value to at least one first artificial neuron of the artificial neurons respectively corresponding to the at least one confirmed input parameter based on the at least one confirmed input parameter; and setting the output of the parameter predictive model to be corresponding to the target result and inputting a training dataset comprising at least one all-one vector into the artificial neurons of the dummy layer of the parameter predictive model to train the parameter predictive model, an optimizer generated from the machine learning method of the trained predictive model for respectively adjusting a second weight value of the artificial neurons excluding the at least one first artificial neuron according to the target result and the at least one first weight value, and the second weight values served as the unconfirmed input parameters in the plurality of the input parameters.

Wherein, the optimizer is further selected from the group consisting of Adaptive Moment Estimation (Adam), Stochastic Gradient Descent (SGD), Momentum, Nesterov Accelerated Gradient (NAG), Adaptive Gradient Algorithm (AdaGrad), Nesterov-accelerated Adaptive Moment Estimation (Nadam), Root Mean Square Propagation (RMSprop), Adaptive Delta (Adadelta), Adam with Weight Decay (AdamW), Adaptive Moment Estimation with Long-term Memory (AMSGrad), Adaptive Belief (AdaBelief), Layer-wise Adaptive Rate Scaling (LARS), AdaHessian, Rectified Adam (RAdam), Lookahead, Momentumized, Adaptive, and Decentralized Gradient Descent (MadGrad), Yogi optimizer, and Adaptive Moment Estimation with Maximum (AdamMax).

Wherein, the trained predictive model is obtained by machine learning through the machine learning method on a dataset.

Wherein, the trained predictive model comprises a plurality of model parameters, and the plurality of model parameters are fixed.

Wherein, the trained predictive model is obtained through machine learning of the dataset with one of the following techniques: an Artificial Neural Network (ANN), a Convolutional Neural Network (CNN), a Recurrent Neural Network (RNN), a Recursive Neural Network (RecNN), and a Complex Neural Network.

Another scope of the present invention is to provide a method for calculating decision variables for calculating a plurality of decision variables. The method for calculating decision variables comprises the following steps of: providing a trained predictive model, the trained predictive model being obtained by machine learning through a machine learning method, the trained predictive model comprising an input layer and an output layer, the trained predictive model for inputting a plurality of input parameters through the input layer and generating a predicted result corresponding to the input parameters through the output layer; setting a target result corresponding to the predicted result of the trained predictive model; adding a dummy layer connected to the input layer of the trained predictive model, the dummy layer comprising a plurality of artificial neurons, each of the artificial neurons being respectively connected to a input terminal of the input layer, a parameter predictive model formed from the trained predictive model and the dummy layer, and the predicted result of the trained predictive model served as an output of the parameter predictive model; setting a bias value of an activation function for each of the artificial neurons to 0, wherein when an input value of the activation function is 1, an output value of the activation function is 1; and setting the output of the parameter predictive model to be corresponding to the target result and inputting a training dataset comprising at least one all-one vector into the artificial neurons of the dummy layer of the parameter predictive model to train the parameter predictive model, an optimizer generated from the machine learning method of the trained predictive model for respectively adjusting a reference weight value of the artificial neurons, and the reference weight values served as the decision variables.

Wherein, the optimizer is further selected from the group consisting of Adaptive Moment Estimation (Adam), Stochastic Gradient Descent (SGD), Momentum, Nesterov Accelerated Gradient (NAG), Adaptive Gradient Algorithm (AdaGrad), Nesterov-accelerated Adaptive Moment Estimation (Nadam), Root Mean Square Propagation (RMSprop), Adaptive Delta (Adadelta), Adam with Weight Decay (AdamW), Adaptive Moment Estimation with Long-term Memory (AMSGrad), Adaptive Belief (AdaBelief), Layer-wise Adaptive Rate Scaling (LARS), AdaHessian, Rectified Adam (RAdam), Lookahead, Momentumized, Adaptive, and Decentralized Gradient Descent (MadGrad), Yogi optimizer, and Adaptive Moment Estimation with Maximum (AdamMax).

Wherein, the trained predictive model is obtained by machine learning through the machine learning method on a dataset.

Wherein, the trained predictive model comprises a plurality of model parameters, and the plurality of model parameters are fixed.

Wherein, the trained predictive model is obtained through machine learning of the dataset with one of the following techniques: an Artificial Neural Network (ANN), a Convolutional Neural Network (CNN), a Recurrent Neural Network (RNN), a Recursive Neural Network (RecNN), and a Complex Neural Network.

In summary, the present invention provides a method for calculating decision variables by adding the dummy layer at the input terminal of a pre-trained neural network predictive model. The dummy layer contains the same number of artificial neurons as the input terminal of the pre-trained predictive model. Each of the artificial neurons is connected to its corresponding input neuron of the trained predictive model through a newly established link. The input value of each of the artificial neurons is set to 1, the bias value of the activation function is set to 0, and when the input value of the activation function is 1, its output value is also 1. The initial weights of the newly established links are selected and set, with these weights considered decision variables. These weight values can have ranges or other inter-conditional restrictions. The parameters of the pre-trained predictive model are frozen, and only the weights of the newly established links are adjusted to obtain the optimal solution using the optimizer built into a general machine-learning platform. The training objective is set so that the output of the parameter predictive model matches the expected target result. At the end of the training, the obtained weights of the newly established links are the feasible input decision variables. Additionally, the method for calculating decision variables can be applied in cell processing and other machine learning models trained through neural networks to deduce the decision variables and process parameters in reverse. This invention effectively uses general machine learning platforms and their built-in methods to find the optimal input parameters that achieve the expected results.

### BRIEF DESCRIPTION OF THE APPENDED DRAWINGS

FIG. 1A and FIG.1B are functional block diagrams illustrating a method for calculating decision variables according to an embodiment of the present invention.
FIG. 2 is a flowchart diagram of the method for calculating decision variables according to an embodiment of the present invention.
FIG. 3 is a flowchart diagram of the method for calculating decision variables according to another embodiment of the present invention.

### DETAILED DESCRIPTION OF THE INVENTION

For the sake of the advantages, spirits and features of the present invention can be understood more easily and clearly, the detailed descriptions and discussions will be made later by way of the embodiments and with reference of the diagrams. It is worth noting that these embodiments are merely representative embodiments of the present invention, wherein the specific methods, devices, conditions, materials and the like are not limited to the embodiments of the present invention or corresponding embodiments. Moreover, the devices in the figures are only used to express their corresponding positions and are not drawing according to their actual proportion.

In the description of this specification, the description with reference to the terms "an embodiment", "another embodiment" or "part of an embodiment" means that a particular feature, structure, material or characteristic described in connection with the embodiment including in at least one embodiment of the present invention. In this specification, the schematic representations of the above terms do not necessarily refer to the same embodiment. Furthermore, the particular features, structures, materials or characteristics described may be combined in any suitable manner in one or more embodiments. Furthermore, the indefinite articles "a" and "an" preceding a device or element of the present invention are not limiting on the quantitative requirement (the number of occurrences) of the device or element. Thus, "a" should be read to include one or at least one, and a device or element in the singular also includes the plural unless the number clearly refers to the singular.

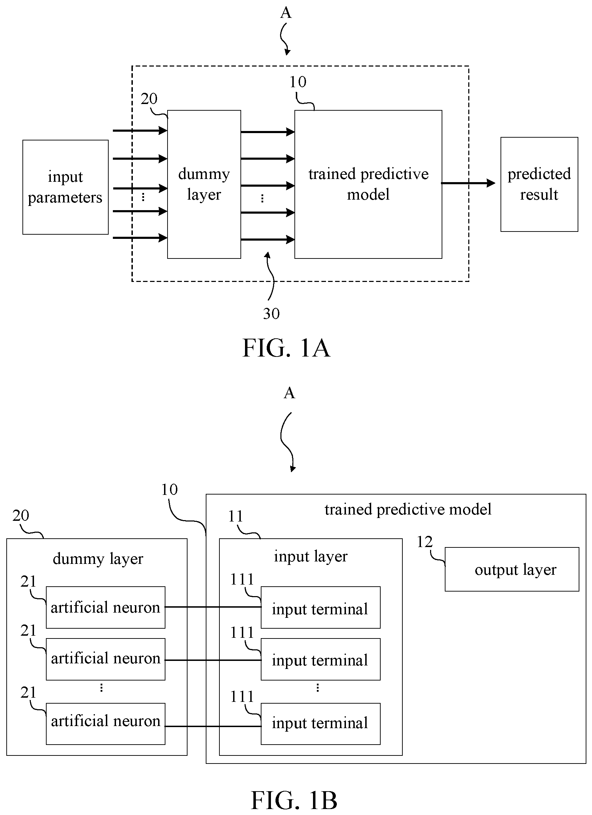

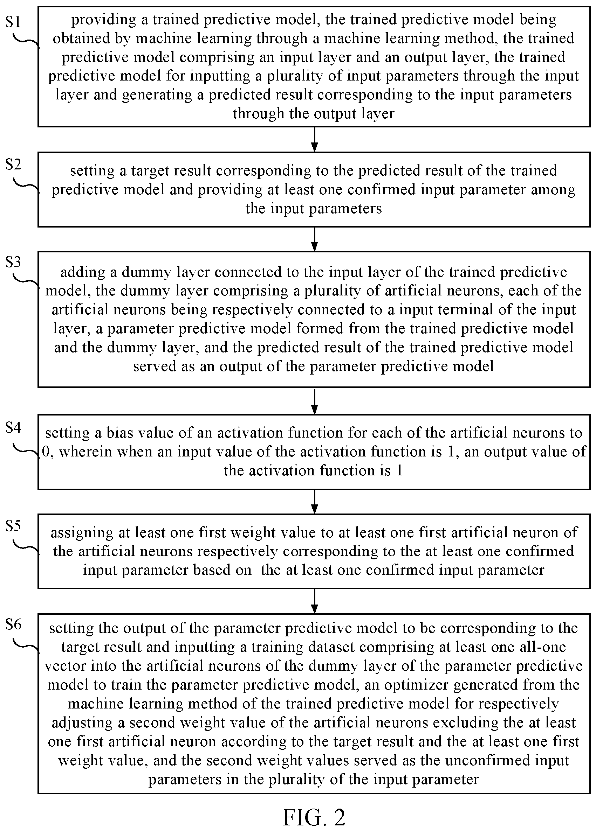

Please refer to FIG. 1A, FIG. 1B, and FIG. 2. FIG. 1A and FIG.1B are functional block diagrams illustrating a method for calculating decision variables according to an embodiment of the present invention. FIG. 2 is a flowchart diagram of the method for calculating decision variables according to an embodiment of the present invention. As shown in FIG. 2, in this embodiment, the method for calculating decision variables includes the following steps: step S1: providing a trained predictive model 10, the trained predictive model 10 being obtained by machine learning through a machine learning method, the trained predictive model 10 comprising an input layer 11 and an output layer 12, the trained predictive model 10 for inputting a plurality of input parameters through the input layer 11 and generating a predicted result (i.e., output result) corresponding to the input parameters through the output layer 12; step S2: setting a target result corresponding to the predicted result of the trained predictive model 10 and providing at least one confirmed input parameter among the input parameters; step S3: adding a dummy layer 20 connected to the input layer 11 of the trained predictive model 10, the dummy layer 20 comprising a plurality of artificial neurons 21, each of the artificial neurons 21 being respectively connected to a input terminal 111 of the input layer 11, a parameter predictive model A formed from the trained predictive model 10 and the dummy layer 20, and the predicted result of the trained predictive model 10 served as an output of the parameter predictive model A; step S4: setting a bias value of an activation function for each of the artificial neurons 21 to 0, wherein when an input value of the activation function is 1, an output value of the activation function is 1; step S5: assigning at least one first weight value to at least one first artificial neuron (not shown in the figures) of the artificial neurons 21 respectively corresponding to the at least one confirmed input parameter based on the at least one confirmed input parameter; and step S6: setting the output of the parameter predictive model A to be corresponding to the target result and inputting a training dataset comprising at least one all-one vector into the artificial neurons 21 of the dummy layer 20 of the parameter predictive model A to train the parameter predictive model A, an optimizer (not shown in the figures) generated from the machine learning method of the trained predictive model 10 for respectively adjusting a second weight value of the artificial neurons 21 excluding the at least one first artificial neuron according to the target result and the at least one first weight value, and the second weight values served as the unconfirmed input parameters in the plurality of the input parameters. Additionally, in this embodiment, the trained predictive model 10 of the method for calculating decision variables comprises a plurality of model parameters, and the plurality of model parameters are fixed. The first weight value is a given value that the optimizer is not allowed to adjust. The optimizer can only adjust the second weight value of the artificial neurons 21, excluding the first artificial neuron.

In the present embodiment, the trained predictive model in Step S1 can be either a model obtained from a public platform trained through machine learning techniques or a model trained by the user. Furthermore, the dataset in the present embodiment can be used for any data collection for training, testing, and validating machine learning models. In practice, the method for calculating decision variables of the present embodiment can be applied to any other trained machine learning model, utilizing confirmed input parameters to match database data and combining confirmed input parameters with unconfirmed reference parameters to infer unconfirmed input parameters. In addition, the trained predictive model in the present embodiment can utilize various machine learning or neural network algorithms according to user needs. These include an Artificial Neural Network (ANN), a Convolutional Neural Network (CNN), a Recurrent Neural Network (RNN), a Recursive Neural Network (RecNN), a Complex Neural Network, or other machine learning algorithms or neural network algorithms to perform machine learning on the dataset.

In more detail, the method for calculating decision variables of the present embodiment involves adding a dummy layer 20 to connect the trained predictive model 10, forming the parameter predictive model A in step S3. The dummy layer 20 contains the same number of artificial neurons 21 as the input terminal 111 of the trained predictive model 10. Each of the artificial neurons 21 is connected to its corresponding neuron in the input terminal of the trained predictive model through a newly established link. In step S4, the bias value of the activation function of the artificial neurons 21 in the dummy layer 20 is set to 0, ensuring that when the input value of the activation function is 1, the output value is also 1. In this embodiment, the activation function allows the second weight values to retain their original values. Next, in step S6, the newly formed dummy layer 20 of the parameter predictive model A (at this point, the dummy layer 20 has formed the new input layer of the parameter predictive model A) is inputted with a training dataset comprising a plurality of all-one vectors for training. Wherein, each of the all-one vectors represents data inputted with a value of 1 for each of the artificial neurons 21. The aforementioned target result serves as the ground truth for the output of parameter predictive model A. The initial weights of the newly established links are selected and set, with the second weight values considered decision variables. The weight values can have ranges or other inter-conditional restrictions, such as positive integer constraints or range limits. During the training process of the parameter predictive model A, the optimizer can adjust the second weight values based on the target result, the training dataset, and the first weight value, so as to deduce the unconfirmed decision variables (unconfirmed input parameters) in reverse.

The optimizer is built into the artificial intelligence engine training platform and can adjust or fix the parameters and weight values of the parameter predictive model A and the trained predictive model 10. During training, the optimizer can freeze the parameters in the trained predictive model 10 and then adjust the weight values 30 between the artificial neurons 21 and the input terminals 111 of the trained predictive model 10. This adjustment aims to minimize the difference between the output value (predicted result) of the parameter predictive model A for each all-one vector in the training dataset and the ground truth (target result). It is important to note that the confirmed input parameters are fixed, such as process parameters already implemented in a process. Therefore, during training, the optimizer also fixes or freezes the first weight values corresponding to the confirmed input parameters while adjusting the other weight values (second weight values). This adjustment minimizes the difference between the output value (predicted result) of the parameter predictive model A and the ground truth (target result). At the end of the training and upon convergence, the second weight values obtained by the optimizer, combined with the fixed first weight values, become the optimal input decision variables. Because the parameter predictive model A exhibits a many-to-one characteristic, meaning multiple different input parameters can correspond to the same output result, each training data (all-one vector) can yield a set of second weight values as the optimal input decision variables. Specifically, even though the trained predictive model itself cannot deduce the input decision variables in reverse from the predicted result, the parameter predictive model in this embodiment can achieve this by adding a dummy layer, fixing the bias values of the artificial neurons in the dummy layer, fixing the training input values, freezing the parameters in the trained predictive model, freezing the first weight values, and minimizing the difference between the output value and the target result. The second weight values can be deduced in reverse and used as the unconfirmed input parameters or decision variables through these methods.

The following example illustrates the process using a cell processing scenario. Suppose a user plans to carry out a 21-day process and has already completed the first 7 days (i.e., has confirmed input parameters). However, the decision variables (i.e., unconfirmed input parameters) for days 8 to 21 have yet to be determined. The goal is to achieve the expected target result by day 21. Using the described method, the user can set the first weight values of the first artificial neurons corresponding to the confirmed input parameters based on the 7 days of the confirmed input parameters. The target result (e.g., achieving 95% cell viability by day 21) is set. Using the optimizer from the machine learning method that generated the trained predictive model, an all-one vector is input, and the second weight values of the other artificial neurons, excluding the first artificial neurons, are adjusted based on the difference between the target result (95% cell viability) and the output of the parameter predictive model, as well as the first weight values. These adjusted second weight values are the decision variables (unconfirmed input parameters) for days 8 to 21. For instance, if the optimizer adjusts the second weight values to 2, the unconfirmed input parameters are set to 2.

In practice, the optimizer can be selected from the group consisting of Adaptive Moment Estimation (Adam), Stochastic Gradient Descent (SGD), Momentum, Nesterov Accelerated Gradient (NAG), Adaptive Gradient Algorithm (AdaGrad), Nesterov-accelerated Adaptive Moment Estimation (Nadam), Root Mean Square Propagation (RMSprop), Adaptive Delta (Adadelta), Adam with Weight Decay (AdamW), Adaptive Moment Estimation with Long-term Memory (AMSGrad), Adaptive Belief (AdaBelief), Layer-wise Adaptive Rate Scaling (LARS), AdaHessian, Rectified Adam (RAdam), Lookahead, Momentumized, Adaptive, and Decentralized Gradient Descent (MadGrad), Yogi optimizer, and Adaptive Moment Estimation with Maximum (AdamMax).

In this embodiment, the optimizer of the method for calculating decision variables further includes an Adaptive Moment Estimation (Adam) optimizer (from now on referred to as the Adam optimizer). The Adam optimizer is configured to adjust the second weight values of the artificial neurons. The Adam optimizer is commonly used for training various deep learning models, including Convolutional Neural Networks (CNNs), Recurrent Neural Networks (RNNs), and self-attention models (Transformers). It is suitable for tasks such as image classification, natural language processing, and translation. The Adam optimizer adjusts the learning rate based on the gradient changes of each parameter, allowing it to have different learning rates in different directions. This capability helps better control the convergence speed of machine learning training. In practice, the selection of the optimizer is more comprehensive than the aforementioned; other optimizers that can adjust parameters and weight values can also be used based on user needs and the type of training model.

In the present embodiment, the trained predictive model can obtained by machine learning through the machine learning method on a dataset. When the method for calculating decision variables of the present embodiment is applied to cell culture processes, the process dataset can be a cell dataset. The cell dataset can comprise a plurality of cell samples, and each of the sample parameters of the cell samples comprises a source parameter and a culture parameter. In practice, the cell dataset can be obtained from any public platform or collected by the user. In addition, the types of the cell samples can include immune cells (such as dendritic cells (DC cells), cytokine-induced killer cells (CIK), tumor-infiltrating lymphocytes (TIL), natural killer cells (NK cells), and CAR-T cells), stem cells (such as peripheral blood stem cells, adipose stem cells, and bone marrow mesenchymal stem cells), chondrocytes, fibroblasts, etc. In practice, it is not limited to the aforementioned, and it can be decided according to the type of cell culture that the user needs to perform. Moreover, in the present embodiment, the source parameter of each of the process samples can further comprise attribute data of a source of each of the process samples. Each of the cell samples in the cell dataset can comprise information about the source associated with the cell and the attribute data of the source, and the attribute data can be physiological data or other relevant data about the source, such as gender, age, medical history, living environment, geographical area of residence. In practice, it is not limited to the aforementioned; the source parameter of the cell samples can further include other parameters that can influence the cell process and are related to the origin of the cells. In practice, it is not limited to the aforementioned, the trained predictive model can be selected according to the user's needs, and different types of datasets can be selected for machine learning.

Furthermore, in the present embodiment, the culture parameter of each of the process samples further comprises operation, tool, material, method, and environment data for each of the process samples. The cell culture process comprises many steps, and each of the steps can include numerous culture parameters. The parameters include those related to people (operation), such as the gender and age of the cell source, the experience and consistency of the cell culture operator, and the personnel, location, environment, and transportation variances associated with the surgical procedure. The parameters include those related to machinery (tool), such as the type and grade of the cell operation platform and the stability and accuracy of temperature and humidity control in the cell culture incubators. The parameters include those related to material, such as the material of the cell culture dishes and the components and ratios of the cell culture medium. The parameters include those related to the method, such as the techniques of the cell culture operators and the methods of the cell culture process. The parameters include those related to the environment, such as the ambient temperature, humidity, carbon dioxide concentration, and concentration of organic molecules in the cell culture environment.

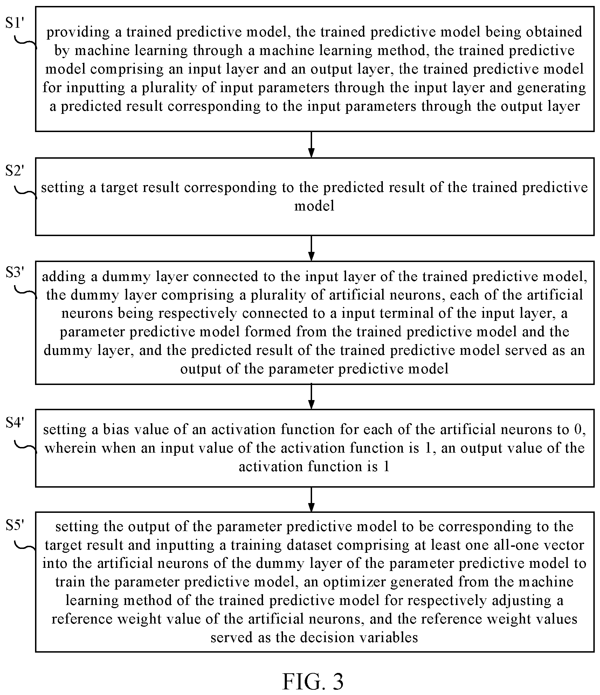

The above embodiment involves a process that includes confirmed input parameters, i.e., a process that has already started. However, the method for calculating decision variables of the present invention can also be applied to processes that have not yet begun and do not have confirmed input parameters. Please refer to FIG. 3. FIG. 3 is a flowchart diagram of the method for calculating decision variables according to another embodiment of the present invention. In this embodiment, the method for calculating decision variables is configured to calculate a plurality of decision variables and includes the following steps: step S1': providing a trained predictive model 10, the trained predictive model 10 being obtained by machine learning through a machine learning method, the trained predictive model 10 comprising an input layer 11 and an output layer 12 , the trained predictive model 10 for inputting a plurality of input parameters through the input layer 11 and generating a predicted result corresponding to the input parameters through the output layer12; step S2': setting a target result corresponding to the predicted result of the trained predictive mode 10; step S3': adding a dummy layer 20 connected to the input layer 11 of the trained predictive model 10, the dummy layer 20 comprising a plurality of artificial neurons 21, each of the artificial neurons 21 being respectively connected to a input terminal 111 of the input layer 11, a parameter predictive model A formed from the trained predictive model 10 and the dummy layer 20, and the predicted result of the trained predictive model 10 served as an output of the parameter predictive model A; step S4': setting a bias value of an activation function for each of the artificial neurons 21 to 0, wherein when an input value of the activation function is 1, an output value of the activation function is 1; and step S5': setting the output of the parameter predictive model A to be corresponding to the target result and inputting a training dataset comprising at least one all-one vector into the artificial neurons 21 of the dummy layer 20 of the parameter predictive model A to train the parameter predictive model A, an optimizer generated from the machine learning method of the trained predictive model 10 for respectively adjusting a reference weight value of the artificial neurons 21, and the reference weight values served as the decision variables. The method for calculating decision variables of the embodiment is suitable for processes without the confirmed input parameters. In this case, the first weight values of the confirmed input parameters are an empty set. The optimizer adjusts and deduces the reference weight values of each artificial neuron in reverse based on minimizing the difference between the output value and the target result. These reference weight values are the decision variables (i.e., unconfirmed decision variables). Note that the other steps in the method for calculating decision variables of the present embodiment are substantially similar to those described in the previous embodiments and would not be described again herein.

In summary, the present invention provides a method for calculating decision variables by adding the dummy layer at the input terminal of a pre-trained neural network predictive model. The dummy layer contains the same number of artificial neurons as the input terminal of the pre-trained predictive model. Each of the artificial neurons is connected to its corresponding input neuron of the trained predictive model through a newly established link. The input value of each of the artificial neurons is set to 1, the bias value of the activation function is set to 0, and when the input value of the activation function is 1, its output value is also 1. The initial weights of the newly established links are selected and set, with these weights considered decision variables. These weight values can have ranges or other inter-conditional restrictions. The parameters of the pre-trained predictive model are frozen, and only the weights of the newly established links are adjusted to obtain the optimal solution using the optimizer built into a general machine-learning platform. The training objective is set so that the output of the parameter predictive model matches the expected target result. At the end of the training, the obtained weights of the newly established links are the feasible input decision variables. Additionally, the method for calculating decision variables can be applied in cell processing and other machine learning models trained through neural networks to deduce the decision variables and process parameters in reverse. This invention effectively uses general machine learning platforms and their built-in methods to find the optimal input parameters that achieve the expected results.

With the examples and explanations mentioned above, the features and spirits of the invention are hopefully well described. More importantly, the present invention is not limited to the embodiment described herein. Those skilled in the art will readily observe that numerous modifications and alterations of the device may be made while retaining the teachings of the invention. Accordingly, the above disclosure should be construed as limited only by the metes and bounds of the appended claims.

## Claims

1. A method for calculating decision variables, comprising the steps of:
providing a trained predictive model, the trained predictive model being obtained by machine learning through a machine learning method, the trained predictive model comprising an input layer and an output layer, the trained predictive model for inputting a plurality of input parameters through the input layer and generating a predicted result corresponding to the input parameters through the output layer;
setting a target result corresponding to the predicted result of the trained predictive model and providing at least one confirmed input parameter among the input parameters;
adding a dummy layer connected to the input layer of the trained predictive model, the dummy layer comprising a plurality of artificial neurons, each of the artificial neurons being respectively connected to a input terminal of the input layer, a parameter predictive model formed from the trained predictive model and the dummy layer, and the predicted result of the trained predictive model served as an output of the parameter predictive model;
setting a bias value of an activation function for each of the artificial neurons to 0, wherein when an input value of the activation function is 1, an output value of the activation function is 1;
assigning at least one first weight value to at least one first artificial neuron of the artificial neurons respectively corresponding to the at least one confirmed input parameter based on the at least one confirmed input parameter; and
setting the output of the parameter predictive model to be corresponding to the target result and inputting a training dataset comprising at least one all-one vector into the artificial neurons of the dummy layer of the parameter predictive model to train the parameter predictive model, an optimizer generated from the machine learning method of the trained predictive model for respectively adjusting a second weight value of the artificial neurons excluding the at least one first artificial neuron according to the target result and the at least one first weight value, and the second weight values served as the unconfirmed input parameters in the plurality of the input parameters.

2. The method for calculating decision variables of claim 1, wherein the optimizer is further selected from the group consisting of Adaptive Moment Estimation (Adam), Stochastic Gradient Descent (SGD), Momentum, Nesterov Accelerated Gradient (NAG), Adaptive Gradient Algorithm (AdaGrad), Nesterov-accelerated Adaptive Moment Estimation (Nadam), Root Mean Square Propagation (RMSprop), Adaptive Delta (Adadelta), Adam with Weight Decay (AdamW), Adaptive Moment Estimation with Long-term Memory (AMSGrad), Adaptive Belief (AdaBelief), Layer-wise Adaptive Rate Scaling (LARS), AdaHessian, Rectified Adam (RAdam), Lookahead, Momentumized, Adaptive, and Decentralized Gradient Descent (MadGrad), Yogi optimizer, and Adaptive Moment Estimation with Maximum (AdamMax).

3. The method for calculating decision variables of claim 1, wherein the trained predictive model is obtained by machine learning through the machine learning method on a dataset.

4. The method for calculating decision variables of claim 1, wherein the trained predictive model comprises a plurality of model parameters, and the plurality of model parameters are fixed.

5. The method for calculating decision variables of claim 1, wherein the trained predictive model is obtained through machine learning of the dataset with one of the following techniques: an Artificial Neural Network (ANN), a Convolutional Neural Network (CNN), a Recurrent Neural Network (RNN), a Recursive Neural Network (RecNN), and a Complex Neural Network.

6. A method for calculating decision variables for calculating a plurality of decision variables, comprising the steps of:
providing a trained predictive model, the trained predictive model being obtained by machine learning through a machine learning method, the trained predictive model comprising an input layer and an output layer, the trained predictive model for inputting a plurality of input parameters through the input layer and generating a predicted result corresponding to the input parameters through the output layer;
setting a target result corresponding to the predicted result of the trained predictive model;
adding a dummy layer connected to the input layer of the trained predictive model, the dummy layer comprising a plurality of artificial neurons, each of the artificial neurons being respectively connected to a input terminal of the input layer, a parameter predictive model formed from the trained predictive model and the dummy layer, and the predicted result of the trained predictive model served as an output of the parameter predictive model;
setting a bias value of an activation function for each of the artificial neurons to 0, wherein when an input value of the activation function is 1, an output value of the activation function is 1; and
setting the output of the parameter predictive model to be corresponding to the target result and inputting a training dataset comprising at least one all-one vector into the artificial neurons of the dummy layer of the parameter predictive model to train the parameter predictive model, an optimizer generated from the machine learning method of the trained predictive model for respectively adjusting a reference weight value of the artificial neurons, and the reference weight values served as the decision variables.

7. The method for calculating decision variables of claim 6, wherein the optimizer is further selected from the group consisting of Adaptive Moment Estimation (Adam), Stochastic Gradient Descent (SGD), Momentum, Nesterov Accelerated Gradient (NAG), Adaptive Gradient Algorithm (AdaGrad), Nesterov-accelerated Adaptive Moment Estimation (Nadam), Root Mean Square Propagation (RMSprop), Adaptive Delta (Adadelta), Adam with Weight Decay (AdamW), Adaptive Moment Estimation with Long-term Memory (AMSGrad), Adaptive Belief (AdaBelief), Layer-wise Adaptive Rate Scaling (LARS), AdaHessian, Rectified Adam (RAdam), Lookahead, Momentumized, Adaptive, and Decentralized Gradient Descent (MadGrad), Yogi optimizer, and Adaptive Moment Estimation with Maximum (AdamMax).

8. The method for calculating decision variables of claim 6, wherein the trained predictive model is obtained by machine learning through the machine learning method on a dataset.

9. The method for calculating decision variables of claim 6, wherein the trained predictive model comprises a plurality of model parameters, and the plurality of model parameters are fixed.

10. The method for calculating decision variables of claim 6, wherein the trained predictive model is obtained through machine learning of the dataset with one of the following techniques: an Artificial Neural Network (ANN), a Convolutional Neural Network (CNN), a Recurrent Neural Network (RNN), a Recursive Neural Network (RecNN), and a Complex Neural Network.
